# EUROPÄISCHE PATENTSCHRIFT

(11) **EP 2 366 274 B1**
(45) Veröffentlichungstag und Bekanntmachung des Hinweises auf die Patenterteilung: **01.06.2016**
(21) Anmeldenummer: 11151025.1
(22) Anmeldetag: 14.01.2011
(51) Int. Cl.: A01D 34/17, A01D 34/20

(54) **Mähfingeranordnung**
Mowing finger assembly
Agencement de doigts de coupe

(30) Priorität: 18.03.2010 DE 102010011941
(43) Veröffentlichungstag der Anmeldung: 21.09.2011
(73) Patentinhaber: Gebr. Schumacher Gerätebaugesellschaft mbH, 57612 Eichelhardt (DE)
(72) Erfinder: Schumacher, Gustav, 57612, Eichelhardt (DE); Schumacher, Friedrich-Wilhelm, 57612 Birnbach (DE)
(74) Vertreter: Müller, Thomas Michael

(56) Entgegenhaltungen:
- WO-A1-2004/032602
- US-A- 3 151 434
- US-A- 3 699 758
- US-A- 4 909 026
- US-E- R E33 546

## Beschreibung

Die Erfindung betrifft eine Mähfingeranordnung und einen Mähbalken für Fingerbalkenmähwerke von Erntemaschinen, sowie ein Verfahren zur Herstellung von Mähfingern. Die Mähfingeranordnung dient zum Führen eines Mähmessers und bildet Gegenschneiden für die an dem Mähmesser angeordneten Messerklingen.

Mähbalken umfassen in der Regel einen Fingerbalken, an dem mehrere Mähfinger angeordnet sind. Relativ zum Fingerbalken ist ein Messer oszillierend geführt, wobei das Messer eine Messerschiene umfasst, an der mehrere Messerklingen befestigt sind. Die Messerklingen bilden Schneiden, die mit Gegenschneiden, die durch die Mähfinger gebildet sind, zusammenarbeiten.

Die Messerklingen haben in der Regel eine dreieckige Grundform. Beim Schnittvorgang wird das Erntegut durch das Hin- und Herbewegen des Messers von den Messerklingen gegen die Mähfinger gedrückt und abgeschnitten. Bei einem solchen, scherenschnittartigen Schnittvorgang wird jede einzelne Messerklinge durch die Schnittbelastung in einer Arbeitsrichtung betrachtet nach hinten gedrückt. Damit das Messer in seiner Lage relativ zum Fingerbalken gehalten ist, ist eine abstützende Führung des Messers gegenüber dem Fingerbalken erforderlich. Eine solche Führung zeigt die Druckschrift DE 198 50 261 A1. Bei dem dort gezeigten Mähbalken ist an dem Fingerbalken ein Führungsblech befestigt, welches eine Führungsfläche bildet, die in Richtung der Bewegungsrichtung des Messers verläuft und dem Messer zugewandt ist. Das Messer stützt sich in Arbeitsrichtung betrachtet nach hinten mit der Messerschiene gegen die Führungsfläche des Führungsblechs ab. Während die Messerschiene hin und her bewegt wird, ist das Führungsblech starr am Fingerbalken montiert. Das Messer wird in Abhängigkeit der Schnittkraft mehr oder minder stark gegen das Führungsblech gedrückt. Die Schnittkraft kann aufgrund schwer zu schneidenden Ernteguts oder aufgrund stumpfer Messerklingen stark ansteigen, so dass erhöhte Reibkräfte zwischen der Messerschiene und dem Führungsblech wirksam werden. Dies führt zu einem starken Verschleiß an der Messerschiene und am Führungsblech. Darüber hinaus wird neben der Antriebsenergie, die zum Schneiden des Ernteguts benötigt wird, ein beachtlicher Teil der Antriebsenergie für die oszillierende Bewegung des Messers benötigt. Die erforderliche Antriebsenergie für die Bewegung des Messers ist nicht selten höher als die benötigte Antriebsenergie für den Schneidvorgang.

In dem europäischen Patent EP 1 551 214 B1 wird die Reibkraft durch eine Rollenführung reduziert. Die Rollenhalter in Form einer Brücke zwischen jeweils zwei Mähfingern bieten eine stabile Abstützung der Rollen und gewährleisten einen Durchtritt von Schmutz. Ferner ist kein Reibwiderstand zwischen dem Messer und dem Fingerbalken zu überwinden. Es ist lediglich der Rollwiderstand der Rollen zu überwinden, der deutlich geringer ist. Die Rollen können des Weiteren mit umlaufenden Kragen ausgestattet sein, um ein Abkippen des Mähmessers durch die Schnittkräfte zu verringern. Dennoch kann sich das Mähmesser zwischen den Rollen verformen, sofern es nicht durch einen Mähfinger geführt ist. Insbesondere bei der Verwendung von Doppelmähfingern ist in dem Zwischenraum keine Rolle angebracht, so dass es zu Verformungen kommen kann. Läuft die Klinge dann wieder in den Mähfinger ein, entsteht eine erhebliche Reibung zwischen der Schnittkante des Mähfingers und der Klinge, was zu erheblichem Verschleiß führt.

US 3,151,434 und US 3,699,758 beschreiben auch eine Mähfingeranordnung.

Ein Aufgabe der Erfindung besteht darin, die Führung des Messers im Bereich der Mähfinger zu verbessern ohne bei erntebedingt geringer Belastung des Mähwerks die Reibung zu erhöhen.

Die Aufgabe wird durch eine Mähfingeranordnung gemäß Patentanspruch 1 gelöst. Die erfindungsgemäße Mähfingeranordnung mit einem Oberteil, welches zur Bildung mindestens eines Mähfingers mit einem Unterteil verbindbar ist, weist einen Klingenspalt zum Führen eines Mähmessers zwischen dem Unterteil und dem Oberteil auf. Als Arbeitsrichtung wird diejenige Richtung bezeichnet, in der ein Mähwerk relativ zu dem Erntegut bewegt wird. Das Oberteil weist erfindungsgemäß auf einer dem Unterteil zugewandten Seite, also im eingebauten Zustand auch dem Mähmesser zugewandten Seite, einen Vorsprung als Anschlag für einen in Arbeitsrichtung betrachtet hinteren Abschnitt des Mähmessers auf.

Ein Vorteil der erfindungsgemäßen Mähfingeranordnung besteht darin, dass der Vorsprung zur Führung des Mähmessers dient, indem ein Abkippen des Mähmessers durch den Vorsprung verhindert wird, wobei der Vorsprung im Bereich des Mähfingers angeordnet ist, also entfernt von rollenförmigen oder sonstigen Abstützungen oder Niederhaltern für das Mähmesser. Unter dem hinteren Abschnitt des Mähmessers ist derjenige Teil des Mähmessers zu verstehen, welcher in Arbeitsrichtung hinter einer Befestigung der Messerklinge an einem Messerbalken angeordnet ist. Wenn die Messerklinge durch das Erntegut umgebogen wird, so erfolgt dies in Richtung Erdboden, während der hintere Abschnitt entgegengesetzt, also nach oben ausgelenkt wird, was jedoch von dem Anschlag in Form des Vorsprungs an dem Mähfingeroberteil unterbunden wird. Der die Auslenkung begrenzende Anschlag hat weiterhin den Vorteil, dass dieser bei geringer Belastung des Mähwerks nicht in Kontakt mit dem Messer kommt und somit die Reibung nicht erhöht.

Vorzugsweise ist der in der Arbeitsrichtung betrachtet hintere Abschnitt des Mähmessers durch den Vorsprung in einer Richtung zu dem Oberteil hin abgestützt, im eingebauten Zustand also nach oben, so dass das Abkippen der Messerklinge nach unten vorteilhaft vermieden wird.

Der Vorsprung ist durch eine Einprägung in das Oberteil von einer dem Mähmesser abgewandten Seite her gebildet. Weiterhin ist ein hinterer Steg des Oberteils an einem in der Arbeitsrichtung betrachtet hinteren Ende des mindestens einen Mähfingers angeordnet, wobei der hintere Steg des Oberteils zur Befestigung der Mähfingeranordnung an einem Fingerbalken dient und wobei der Vorsprung in der Arbeitsrichtung betrachtet vor dem hinteren Steg angeordnet ist. Vor dem hinteren Steg ist mindestens eine obere Wölbung angeordnet, wobei die mindestens eine obere Wölbung auf einer konkaven, im eingebauten Zustand dem Mähmesser zugewandten Seite den Vorsprung aufweist. Konkav und konvex bezeichnet im Sinne der Erfindung lediglich die Hauptrichtung der Wölbung und stellt keine Einschränkung hinsichtlich der Form oder Beschaffenheit der Wölbung.

Der Vorsprung auf der Konkavseite der Wölbung ist durch geeignete Maßnahmen herstellbar. Der Vorsprung ist durch die Einprägung in die obere Wölbung von einer konvexen, dem Mähmesser also im eingebauten Zustand abgewandten Seite her gebildet. Die Einprägung kann einzeln, also am bereits gefertigten Oberteil eingebracht sein, oder durch eine entsprechend modifizierte Prägeform bei der eigentlichen Herstellung des Oberteils durch Umformen in einem Arbeitsschritt geformt sein.

Der hintere Steg des Oberteils weist eine Befestigungsbohrung auf, wobei die Einprägung gemäß einer bevorzugten Ausführungsform in einem der Befestigungsbohrung zugewandten Bereich der oberen Wölbung angeordnet ist. Ein besonderer Vorteil dieser Ausführungsform liegt darin, dass die Einprägung auf diese Art gleichzeitig dazu genutzt werden kann, einen freien Bereich um die Befestigungsbohrung zu schaffen, der bei einem Verschrauben der Mähfingeranordnung für einen Schraubenkopf bzw. eine Schraubenmutter benötigt wird. Dadurch sind vorteilhaft zwei Umformaufgaben gleichzeitig gelöst.

Die erfindungsgemäße Mähfingeranordnung kann einen oder mehrere Mähfinger aufweisen. Bevorzugt bilden das Oberteil und das Unterteil zwei Mähfinger. Der hintere Steg des Oberteils ist dann insbesondere als hinterer Verbindungssteg des Oberteils ausgeführt, wobei die beiden Mähfinger über den hinteren Verbindungssteg und einen vorderen Verbindungssteg am Oberteil, sowie über einen hinteren Verbindungssteg und einen vorderen Verbindungssteg am Unterteil miteinander verbunden sind. Diese Doppelfingeranordnung ist gegenüber dem einzelnen Mähfinger vorteilhaft stabil und dabei leichter als Anordnungen mit drei oder gar mehr Mähfingern.

Vorzugsweise dient der hintere Verbindungssteg des Unterteils zur Befestigung der Mähfingeranordnung an einem Fingerbalken. Das Unterteil weist insbesondere eine erste Messerauflage an einem ersten der beiden Mähfinger und eine zweite Messerauflage an einem zweiten der beiden Mähfinger auf, wobei die beiden Messerauflagen über den vorderen Verbindungssteg des Unterteils miteinander verbunden sind und wobei der vordere Verbindungssteg des Unterteils eine dritte Messerauflage bildet. Bevorzugt bilden die erste und die zweite Messerauflage jeweils zwei untere Gegenschneiden.

Weiterhin bevorzugt weist das Oberteil eine erste Messeranlage an einem ersten der beiden Mähfinger und eine zweite Messeranlage an einem zweiten der beiden Mähfinger auf, wobei die beiden Messeranlagen über den vorderen Verbindungssteg des Oberteils miteinander verbunden sind und wobei der vordere Verbindungssteg des Oberteils eine dritte Messeranlage bildet, wobei die erste und die zweite Messeranlage insbesondere jeweils zwei obere Gegenschneiden bilden.

Insbesondere bilden die Messerauflagen des Unterteils und die Messeranlagen des Oberteils den Klingenspalt.

Das Oberteil ist vorzugsweise im Bereich der ersten und der zweiten Messeranlage eben ausgebildet und die oberen Wölbungen beginnen in Arbeitsrichtung betrachtet vor einer hinteren Kante des vorderen Verbindungsstegs. Die Verbindungsstege des Oberteils und die oberen Wölbungen bilden insbesondere eine Öffnung, die teilweise bis in den hinteren Verbindungssteg reicht. Weiterhin bevorzugt weist das Unterteil eine Auflageplatte auf, welche die Messerauflagen bildet, wobei das Unterteil einen Träger aufweist, der mit der Auflageplatte verbunden ist und den hinteren Verbindungssteg des Unterteils umfasst.

In dem hinteren Verbindungssteg des Unterteils sind vorzugsweise Befestigungsdurchbrüche zum Befestigen der Mähfingeranordnung an einen Messerbalken vorgesehen, die einen von einem Kreis abweichenden Querschnitt aufweisen.

Ein weiterer Gegenstand der Erfindung ist ein Verfahren zur Herstellung eines Mähfingers gemäß Patentanspruch 6.

Der Vorsprung dient als Anschlag für einen hinteren Bereich eines Mähmessers und verhindert so vorteilhaft ein Abkippen des Mähmessers, wie oben beschrieben. Der Vorsprung ist während der Herstellung des Oberteils besonders einfach zu bilden, vorzugsweise in einem Arbeitsschritt mit dem Prägen des Oberteils, wobei der Vorsprung insbesondere durch eine Einprägung auf einer dem Unterteil abgewandten Seite des Oberteils gebildet wird.

Bei dem Prägen des Oberteils wird ein hinterer Steg an einem in der Arbeitsrichtung betrachtet hinteren Ende des Mähfingers und eine davor angeordnete obere Wölbung geformt, wobei der Vorsprung insbesondere an einer konkaven Seite der Wölbung gebildet wird.

Der Vorsprung ist durch eine Einprägung in eine konvexe Seite der oberen Wölbung hergestellt wobei durch die Einprägung insbesondere ein Freiraum um eine Befestigungsbohrung des hinteren Stegs geschaffen wird. Der Freiraum erlaubt dann vorteilhaft die Anordnung eines Schraubenkopfs bzw. einer Schraubenmutter im Bereich der Befestigungsbohrung.

Ein weiterer Gegenstand der Erfindung ist ein Mähbalken gemäß Patentanspruch 9.

Hinsichtlich weiterer Merkmale des Mähbalkens wird Bezug auf die Druckschrift EP 1 551 214 B1 genommen.

Gemäß einer bevorzugten Ausführungsform des Mähbalkens sind Rollen vorgesehen, über die das Messer gegen den Fingerbalken in Arbeitsrichtung betrachtet nach hinten abgestützt ist, wobei die Rollen jeweils an einem Rollenhalter drehbar gelagert sind und die Rollenhalter am Fingerbalken befestigt sind, wobei die Rollenhalter vorzugsweise in Form von Brücken zwischen zwei benachbarten Mähfingern gebildet sind.

Die Mähfinger und die Rollenhalter können vorzugsweise mittels gemeinsamer Befestigungsschrauben am Fingerbalken befestigt sein. Insbesondere sind die Rollenhalter jeweils zwischen zwei benachbart angeordneten Mähfingeranordnungen angebracht und mittels Befestigungsschrauben beider benachbart angeordneter Mähfingeranordnungen befestigt.

Anstelle von Rollen können auch Führungsplatten, vorzugsweise mit einer oben führenden Rolle zur Führung am Messerrücken verwendet werden.

Nachfolgend wir die Erfindung anhand eines in Zeichnungen dargestellten Ausführungsbeispiels näher erläutert. Die Ausführungen betreffen die erfindungsgemäße Mähfingeranordnung, den Mähbalken und das erfindungsgemäße Verfahren gleichermaßen. Die Ausführungen sind beispielhaft und schränken den allgemeinen Erfindungsgedanken nicht ein.

Es zeigen
Figur 1 ein Oberteil einer erfindungsgemäßen Mähfingeranordnung;
Figur 2 eine erfindungsgemäße Mähfingeranordnung in einer Seitenansicht;
Figur 3 das Oberteil gemäß Figur 1 in einer weiteren Ansicht;
Figur 4 ein in Figur 2 mit IV bezeichnetes Detail;
Figur 5 das Oberteil gemäß Figur 1 in einer perspektivischen Darstellung;
Figur 6 die Mähfingeranordnung gemäß Figur 2 in perspektivischer Darstellung;
Figur 7 die Mähfingeranordnung gemäß Figur 2 mit einem Mähmesser und
Figur 8 die Mähfingeranordnung gemäß Figur 7 mit dem Mähmesser in einer bis zum Anschlag ausgelenkten Position.

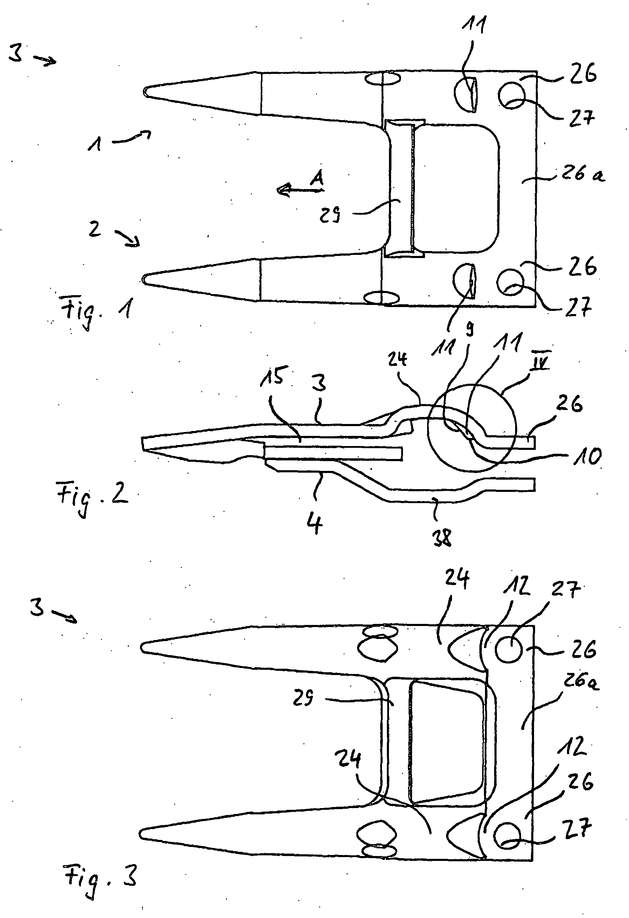

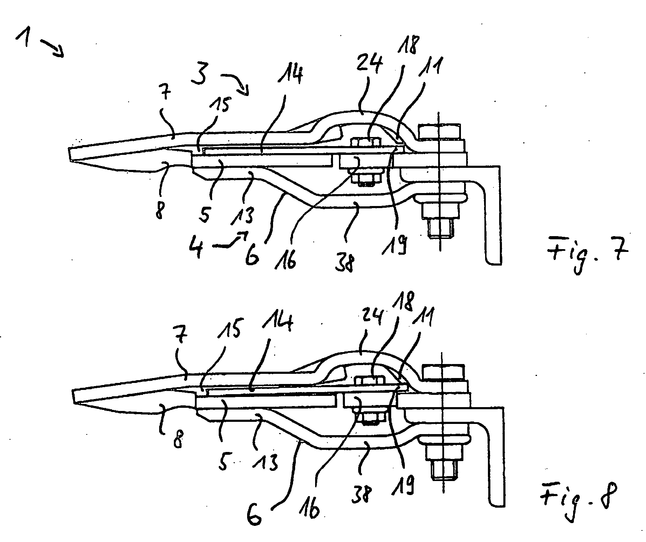

Die Figuren 1 bis 3 werden gemeinsam beschrieben. Die Figuren 1 und 3 zeigen ein Oberteil 3 einer erfindungsgemäßen Mähfingeranordnung, welche mit einem Unterteil 4 gemäß der Mähfingeranordnung in Figur 2 verbindbar sind. Die im Ausführungsbeispiel dargestellte Mähfingeranordnung weist zwei Mähfinger 1, 2 auf. Der Zwischenraum zwischen dem Oberteil 3 und dem Unterteil 4 ist dazu vorgesehen, das Mähmesser aufzunehmen, was später mit Bezug auf die Figuren 7 und 8 näher erläutert wird. Der Pfeil A gibt eine Arbeitsrichtung an, in welcher die Mähfingeranordnung im Mähbetrieb bewegt wird. Mit Arbeitsrichtung A ist also die Bewegungsrichtung des gesamten Mähwerk beim Mähvorgäng gemeint. Ein in Arbeitsrichtung A gesehen hinten angeordneter Abschnitt des Oberteils 3 bildet einen hinteren Steg 26, welcher zur Befestigung der Mähfingeranordnung an einem nicht dargestellten Mähbalken mittels der Bohrung 27 dient. Die Stege 26 der Oberteile 3 der zwei Mähfinger 1, 2 sind durch ein hinteres Verbindungsstück 26a zu einem Verbindungssteg verbunden. Der Fachmann erkennt, dass ohne eine solche Verbindung 26a eine Mähfingeranordnung mit nur einem Mähfinger vorliegen würde, welche im Sinne der Erfindung ebenso denkbar ist, wie drei oder mehr verbundene Mähfinger in einer Mähfingeranordnung. Bauteile, die einmal je Mähfinger vorhanden sind, werden im Folgenden in der Einzahl angesprochen. Der Fachmann erkennt, dass die Gesamtzahl von der Anzahl der Mähfinger abhängig ist. Ein vorderer Verbindungssteg 29 verbindet ebenfalls die zwei Mähfinger 1, 2 am Oberteil 3 und bildet einen Teil des Klingenspalts 15.

In Arbeitsrichtung A gesehen vor dem hinteren Steg 26 ist eine obere Wölbung 24 in dem Oberteil 3 ausgeformt, welche einen Raum für die Aufnahme des nicht dargestellten Mähmessers schafft. Die Wölbung 24 ist also zum Unterteil 4 hin konkav ausgebildet, wobei der Begriff konkav hier lediglich die Hauptrichtung der Ausformung der Wölbung 24 angibt, ohne diese auf eine geometrische Form, wie beispielsweise sphärisch, elliptisch oder eckig festzulegen. Das Unterteil 4 weist eine entsprechende, ebenfalls von dem Mähmesser weg ausgeformte untere Wölbung 38.

Im in Arbeitsrichtung A betrachtet hinteren Teil der oberen Wölbung 24 ist ein Vorsprung 11 angeordnet, welcher in Richtung zu dem Unterteil 4 hin aus der Wölbung 24 hervorsteht.

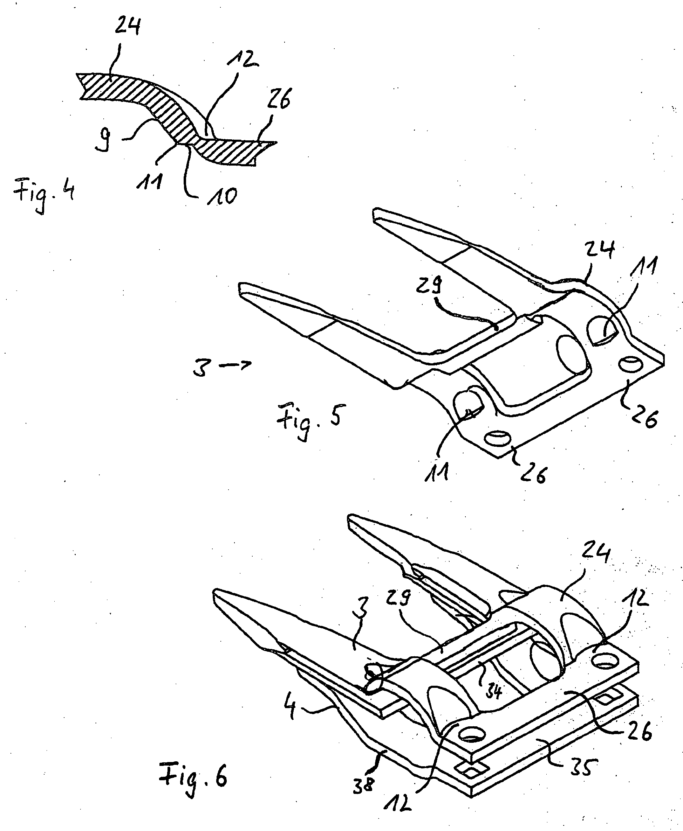

In der Figur 4 ist ein mit IV bezeichnetes Detail aus der Figur 2 vergrößert dargestellt. Es zeigt den Vorsprung 11 in der oberen Wölbung 24, im Bereich des Übergangs zu dem hinteren Steg 26, wobei der Vorsprung 11 eine schräg verlaufende Flanke 9 und eine dem Mähmesser zugewandte Fläche 10 aufweist. Durch die Fläche 10 des Vorsprungs 11 ist ein Anschlag für das Mähmesser gebildet, welcher dessen Auslenkung begrenzt, wie später noch näher erläutert wird. Dem Vorsprung 11 auf der konvexen Seite der Wölbung 24 gegenüber liegt eine zugehörige Einprägung 12 auf der konkaven Seite der Wölbung 24. Der Vorsprung 11 ist vorzugsweise durch Einprägen der Einprägung 12 auf der konvexen, dem Mähmesser abgewandten Seite der Wölbung 24 hergestellt. Durch den Umformungsvorgang muss dass verdrängte Material ausweichen und bildet den Vorsprung 11 auf der konkaven Seite der Wölbung 24 aus. In den Figuren 3 und 6 ist gut erkennbar, dass die Einprägung 12 vorteilhaft dazu dienen kann, einen ebenen Bereich um die Bohrung 27 herum zu schaffen, der ausreichend Raum für einen Schraubbolzenkopf oder eine Schraubenmutter aufweist.

In der Figur 5 ist das Oberteil 3 in einer perspektivischen Darstellung von seiner dem Unterteil zugewandten Seite gesehen dargestellt, wodurch die Lage des hinteren Stegs 26, der oberen Wölbung 24 mit dem Vorsprung 11 und dem vorderen Verbindungssteg 29 deutlich wird.

In der Figur 6 ist eine Mähfingeranordnung gemäß Figur 2 in einer perspektivischen Ansicht dargestellt. Zwischen dem hinteren Verbindungssteg 26 und dem vorderen Verbindungssteg 29 des Oberteils 3 und der oberen Wölbung 24 ist eine Öffnung gebildet, die sich bis in den hinteren Verbindungssteg 26 des Oberteils 3 erstreckt. Somit ist sicher gestellt, dass der hintere Verbindungssteg 26 des Oberteils 3 nicht gewölbt ist, was zu Verwerfungen bei der Umformung führen könnte. Der vordere Verbindungssteg 29 des Oberteils 3 ist annähernd parallel zu einem vorderen Verbindungssteg 34 des Unterteils 4 angeordnet. Der vordere Verbindungssteg 29 des Oberteils 3 ist somit nicht gewölbt. Der vordere Verbindungssteg 29 des Oberteils 3 und der vordere Verbindungssteg 34 des Unterteils 4 bilden einen Spalt, der Teil des Klingenspalts 15 (siehe Figur 2) ist.

In der Figur 7 ist die Mähfingeranordnung gemäß Figur 2 mit einem Mähmesser 16 in einer neutralen, unbelasteten Position dargestellt, während in der Figur 8 die Mähfingeranordnung gemäß Figur 7 mit dem Mähmesser 16 in einer bis zum Anschlag 11 ausgelenkten Position dargestellt ist.

Das Oberteil 3 ist bevorzugt als Blechumformteil gebildet und weist einen oberen Fingerabschnitt 7 auf. Eine Auflageplatte 5 ist insbesondere ein Stanzteil, das aus Blech gefertigt ist und einen unteren Fingerabschnitt 8 aufweist. Der obere Fingerabschnitt 7 und der untere Fingerabschnitt 8 sind an einem freien Ende des Mähfingers 1 miteinander verbunden, vorzugsweise verschweißt. Ein Träger 6 weist einen Tragarm 13 auf, der fest mit dem unteren Fingerabschnitt 8, beispielsweise durch Verschweißen, verbünden ist. Der Träger 6 ist hierbei ebenfalls, wie das Oberteil 3 aus einem Blechumformteil gefertigt.

Das Mähmesser 16 weist eine Klinge 14 auf, deren Schneide in dem Klingenspalt 15 geführt ist. Ein in Arbeitsrichtung A hinter einer Befestigung 18 angeordnete hintere Abschnitt 19 der Klinge 14 wird im Mähbetrieb in Richtung zu dem Oberteil 3 hin ausgelenkt, wenn die Klinge 14 vorne durch die Schneidkräfte beim Mähen nach unten, also zum Boden bzw. zum Erntegut hin gezogen wird. Dabei kommt der hintere Teil 19 der Klinge 14 in Anlage zu dem Vorsprung 11, wie in der Figur 8 dargestellt. Der Vorsprung 11 verhindert so vorteilhaft ein abkippen der Klinge 14 nach unten.

### Bezugszeichenliste

- 1: Erster Mähfinger
- 2: Zweiter Mähfinger
- 3: Oberteil
- 4: Unterteil
- 5: Auflageplatte
- 6: Träger
- 7: Oberer Fingerabschnitt
- 8: Unterer Fingerabschnitt
- 9: Flanke
- 10: Fläche
- 11: Vorsprung
- 12: Einprägung
- 13: Tragarm
- 14: Klinge
- 15: Klingenspalt
- 16: Mähmesser
- 18: Befestigung
- 24: Obere Wölbung
- 26: Hintere Steg des Oberteils
- 26a: Verbindung
- 27: Bohrung
- 29: Vordere Steg des Oberteils
- 34: Vordere Steg des Unterteils
- 35: Hinterer Steg des Unterteils
- 38: Untere Wölbung
- A: Arbeitsrichtung

## Patentansprüche

1. Mähfingeranordnung mit einem Oberteil (3), welches zur Bildung mindestens eines Mähfingers (1) mit einem Unterteil (4) verbindbar ist, und einem Klingenspalt (15) zum Führen eines Mähmessers (16) zwischen dem Unterteil (4) und dem Oberteil (3),
wobei das Oberteil (3) auf einer dem Unterteil zugewandten Seite einen Vorsprung (11) als Anschlag für einen in einer Arbeitsrichtung (A) betrachtet hinteren Abschnitt des Mähmessers aufweist,
wobei ein hinterer Steg (26) des Oberteils (3) an einem in der Arbeitsrichtung (A) betrachtet hinteren Ende des mindestens einen Mähfingers (1) angeordnet ist, wobei der hintere Steg (26) des Oberteils (3) zur Befestigung der Mähfingeranordnung an einem Fingerbalken dient und wobei in der Arbeitsrichtung (A) betrachtet vor dem hinteren Steg (26) der Vorsprung (11) und mindestens eine obere Wölbung (24) angeordnet ist,
**dadurch gekennzeichnet,**
**dass** der Vorsprung (11) auf einer konkaven Seite der oberen Wölbung (24) angeordnet und durch eine Einprägung (12) in die obere Wölbung von einer konvexen, dem Mähmesser im eingebauten Zustand abgewandten Seite her, gebildet ist.

2. Mähfingeranordnung nach Anspruch 1,
**dadurch gekennzeichnet,**
**dass** eine Bewegung des in der Arbeitsrichtung (A) betrachtet hinteren Abschnitts des Mähmessers (16) durch den Vorsprung (11) in einer Richtung zu dem Oberteil (3) hin begrenzt ist.

3. Mähfingeranordnung nach einem der Ansprüche 1 oder 2,,
**dadurch gekennzeichnet,**
**dass** der hintere Steg (26) des Oberteils (3) eine Befestigungsbohrung (27) aufweist, wobei die Einprägung (12) in einem der Befestigungsbohrung (27) zugewandten Bereich der oberen Wölbung (24) angeordnet ist.

4. Mähfingeranordnung nach einem der vorangehenden Ansprüche,
**dadurch gekennzeichnet,**
**dass** das Oberteil (3) und das Unterteil (4) zwei Mähfinger (1, 2) bilden.

5. Mähfingeranordnung nach Anspruch 4,
**dadurch gekennzeichnet,**
**dass** der hintere Steg (26) des Oberteils (3) als hinterer Verbindungssteg (26, 26a) des Oberteils ausgeführt ist,
wobei die beiden Mähfinger (1, 2) über den hinteren Verbindungssteg (26, 26a) und einen vorderen Verbindungssteg (29) am Oberteil (3), sowie über einen hinteren Verbindungssteg (35) und einen vorderen Verbindungssteg (34) am Unterteil (4) miteinander verbunden sind.

6. Verfahren zur Herstellung eines Mähfingers (1)
- durch Prägen eines Oberteils (3), wobei an dem Oberteil ein zu einem Unterteil (4) gerichteter Vorsprung (11) als Anschlag für einen in einer Arbeitsrichtung (A) betrachtet hinteren Abschnitt eines Mähmessers (16) gebildet wird und
- durch Verbinden des Oberteils mit dem Unterteil,
wobei bei dem Prägen des Oberteils (3) ein hinterer Steg (26) an einem in der Arbeitsrichtung (A) betrachtet hinteren Ende des Mähfingers (1) und eine davor angeordnete, obere Wölbung (24) geformt werden,
**dadurch gekennzeichnet,**
**dass** der Vorsprung (11) an einer konkaven Seite der oberen Wölbung (24) durch eine Einprägung (12) in eine konvexe Seite der oberen Wölbung auf einer dem Unterteil (4) abgewandten Seite des Oberteils (3) hergestellt wird.

7. Verfahren nach Anspruch 6,
**dadurch gekennzeichnet,**
**dass** durch die Einprägung (12) ein Freiraum um eine Befestigungsbohrung (27) des hinteren Stegs (26) geschaffen wird.

8. Verfahren nach einem der Ansprüche 6 oder 7,
**dadurch gekennzeichnet,**
**dass** das Prägen des Oberteils (3) und das Bilden des Vorsprungs (11) in einem Arbeitsschritt erfolgt.

9. Mähbalken eines Fingerbalkenmähwerks einer Landmaschine umfassend
- einen Fingerbalken,
- mindestens eine Mähfingeranordnung nach einem der Ansprüche 1 bis 5, befestigt an dem Fingerbalken,
- ein Mähmessers mit Messerklingen, die an einer Messerschiene befestigt sind und die jeweils Schneiden aufweisen,
wobei das Mähmesser relativ zum Fingerbalken oszillierend geführt ist.

10. Mähbalken nach Anspruch 9,
**dadurch gekennzeichnet,**
**dass** Rollen vorgesehen sind, über die das Messer gegen den Fingerbalken in Arbeitsrichtung betrachtet nach hinten abgestützt ist, wobei die Rollen jeweils an einem Rollenhalter drehbar gelagert sind und die Rollenhalter am Fingerbalken befestigt sind, wobei die Rollenhalter insbesondere in Form von Brücken zwischen zwei benachbarten Mähfingern gebildet sind.

## Claims

1. Mowing finger arrangement with an upper element (3), which is connectable to a lower element (4) for forming at least one mowing finger (1), and with a blade gap (15) for guiding a mowing sickle (16) between the lower element (4) and the upper element (3),
wherein the upper element (3) has on a side facing the lower element a projection (11) as an abutment for a rear portion of the mowing sickle, when seen in a working direction (A),
wherein a rear web (26) of the upper element (3) is arranged on a rear end of the at least one mowing finger (1), when seen in the working direction (A), wherein the rear web (26) of the upper element (3) serves for attaching the mowing finger assembly on a finger bar and wherein, when seen in the working direction (A), the projection (11) and at least one upper bulge (24) are arranged in front of the rear web (26),
**characterised in**
**that** the projection (11) is arranged on a concave side of the upper bulge (24) and is formed by an impression (12) in the upper bulge from a convex side facing away from the mowing sickle in an assembled condition.

2. Mowing finger arrangement according to claim 1,
**characterised in**
**that** a movement of the rear portion of the mowing sickle (16), when seen in the working direction (A), is delimited by the projection (11) in a direction towards the upper element (3).

3. Mowing finger arrangement according to one of claims 1 or 2,
**characterised in**
**that** the rear web (26) of the upper element (3) has an attachment bore (27), wherein the impression (12) is arranged in an area of the upper bulge (24) facing the attachment bore (27).

4. Mowing finger arrangement according to one of the preceding claims,
**characterised in**
**that** the upper element (3) and the lower element (4) form two mowing fingers (1, 2).

5. Mowing finger arrangement according to claim 4,
**characterised in**
**that** the rear web (26) of the upper element (30) is constructed as a rear connection web (26, 26a) of the upper element,
wherein the two mowing fingers (1, 2) are connected to each other by means of the rear connection web (26, 26a) and a front connection web (29) on the upper element (3), as well by a rear connection web (35) and a front connection web (24) to the lower element (4).

6. Method for producing a mowing finger (1),
- by means of embossing an upper element (3), wherein on the upper element a projection (11) directed towards the lower element (4) is formed as an abutment for a rear portion of the mowing sickle (16), when seen in a working direction (A), and
- by means of connecting the upper element to the lower element,
wherein during the embossing of the upper element (3) a rear web (26) is formed on a rear end of the mowing finger (1), when seen in the working direction (A), and an upper bulge (24) is formed, located in front of the rear web,
**characterised in**
**that** the projection (11) is produced on a concave side of the upper bulge (24) by means of an impression (12) in a convex side of the upper bulge on a side of the upper element (3) facing away from the lower element (4).

7. Method according to claim 6,
**characterised in**
**that** by means of the impression (12) a space is provided around an attachment bore (27) of the rear web (26).

8. Method according to one of claims 6 or 7,
**characterised in**
**that** the embossing of the upper element (3) and the forming of the projection (11) is carried out in one working step.

9. Mowing bar of a finger bar mower of an agricultural machine comprising
- a finger bar
- at least one mowing finger arrangement according to one of claims 1 to 5, attached on the finger bar,
- a mowing sickle with blades, attached on a sickle bar and having respectively cutting edges,
wherein the mowing sickle is reciprocatingly guided relative to the finger bar.

10. Mowing bar according to claim 9,
**characterised in**
**that** rollers are provided, by means of which the sickle is supported rearwards on the finger bar, when seen in a working direction, wherein the rollers are rotatably supported respectively on a roller holder and wherein the roller holder is mounted on the finger bar, wherein the roller holder is especially formed in the shape of bridges between two neighbouring mowing fingers.

## Revendications

1. Agencement de doigts de coupe avec une partie supérieure (3), laquelle peut être reliée à une partie inférieure (4) pour former au moins un doigt de coupe (1) et avec un espace de logement pour lame (15) pour passer une lame de coupe (16) entre la partie inférieure (4) et la partie supérieure (3),
la partie supérieure (3) comportant sur un côté tourné vers la partie inférieure, une partie en saillie (11) en tant que butée pour une section arrière de la lame de coupe, vue dans un sens du travail (A),
une traverse arrière (26) de la partie supérieure (3) étant disposée sur une extrémité arrière d'au moins un doigt de coupe (1), vue dans le sens du travail (A), la traverse arrière (26) de la partie supérieure (3) servant à fixer l'agencement de doigts de coupe sur une barre de coupe et la partie en saillie (11) et au moins une courbure supérieure (24), vues dans le sens du travail (A),étant disposés avant la traverse arrière (26),
**caractérisé en ce que**
la partie en saillie (11) est disposée sur un côté concave de la courbure supérieure (24) et est formée d'un côté convexe, opposé à la lame de coupe à l'état monté par une empreinte (12) dans la courbure supérieure.

2. Agencement de doigts de coupe selon la revendication 1,
**caractérisé en ce**
**qu'**un mouvement de la section arrière de la lame de coupe (16), vue dans le sens du travail (A), est limité par la partie en saillie (11) dans une direction tournée vers la partie supérieure (3).

3. Agencement de doigts de coupe selon l'une quelconque des revendications 1 ou 2,
**caractérisé en ce que**
la traverse arrière (26) de la partie supérieure (3) comporte un trou de fixation (27), l'empreinte (12) étant disposée dans une zone de la courbure supérieure (24) tournée vers le trou de fixation (27).

4. Agencement de doigts de coupe selon l'une quelconque des revendications précédentes,
**caractérisé en ce que**
la partie supérieure (3) et la partie inférieure (4) forment deux doigts de coupe (1, 2).

5. Agencement de doigts de coupe selon la revendication 4,
**caractérisé en ce que**
la traverse arrière (26) de la partie supérieure (3) est exécutée comme traverse de raccordement arrière (26, 26a) de la partie supérieure, les deux doigts de coupe (1, 2) étant reliés entre eux par la traverse de raccordement arrière (26, 26a) et une traverse de raccordement avant (29) sur la partie supérieure (3), ainsi que par une traverse de raccordement arrière (35) et une traverse de raccordement avant (34) sur la partie inférieure (4).

6. Procédé destiné à la fabrication d'un doigt de coupe (1)
- par estampage d'une partie supérieure (3), une partie en saillie (11) orientée vers une partie inférieure (4) étant formée sur la partie supérieure, en tant que butée pour une section arrière d'une lame de coupe (16), vue dans un sens du travail (A), et
- par assemblage de la partie supérieure à la partie inférieure,
par la formation, lors de l'estampage de la partie supérieure (3), d'une traverse arrière (26) sur une extrémité arrière du doigt de coupe (1), vue dans le sens du travail (A) et d'une courbure (24) supérieure, disposée devant,
**caractérisé en ce que**
la partie en saillie (11) est réalisée sur un côté concave de la courbure supérieure (24) par une empreinte (12) dans un côté convexe de la courbure supérieure sur un côté de la partie supérieure (3), opposé à la partie inférieure (4).

7. Procédé selon la revendication 6,
**caractérisé en ce**
**qu'**un espace est créé par l'empreinte (12) autour d'un trou de fixation (27) de la traverse arrière (26).

8. Procédé selon l'une quelconque des revendications 6 ou 7,
**caractérisé en ce que**
l'estampage de la partie supérieure (3) et la formation de la partie en saillie (11) ont lieu en une phase de travail.

9. Barre de coupe d'une faucheuse à barre de coupe d'une machine agricole comprenant
- une barre de coupe,
- au moins un agencement de doigts de coupe selon l'une quelconque des revendications 1 à 5, fixé sur une barre de coupe,
- une lame avec des sections de lames, qui sont fixées sur un rail de lames et présentent respectivement des tranchants,
la lame de coupe étant guidée de manière oscillante par rapport à la barre de coupe.

10. Barre de coupe selon la revendication 9,
**caractérisée en ce que**
des galets sont prévus sur lesquels la lame est appuyée vers l'arrière contre la barre de coupe, vue dans le sens du travail, les galets étant logés pouvant tourner respectivement sur un support de galets et les supports de galets étant fixés sur la barre de coupe, les supports de galets étant formés en particulier sous la forme de pontages entre deux doigts de coupe voisins.
